# FASCICULE DE BREVET EUROPEEN

(11) **EP 1 131 177 B1**
(45) Date de publication et mention de la délivrance du brevet: **15.09.2004**
(21) Numéro de dépôt: 99971750.7
(22) Date de dépôt: 09.11.1999
(51) Int. Cl.: B22F 1/00, B22F 3/10, B22F 7/08, B23K 35/30, B23K 35/02

(54) **PROCEDE DE FABRICATION PAR METALLURGIE DES POUDRES DE PIECES DE FORME AUTOBRASANTES**
VERFAHREN ZUR PULVERMETALLURGISCHEN HERSTELLUNG VON SELBSTHARTLÖTENDEN FORMTEILEN
METHOD FOR MAKING SELF-BRAZING COMPONENTS USING POWDER METALLURGY

(30) Priorité: 10.11.1998 FR 9814119
(43) Date de publication de la demande: 12.09.2001
(73) Titulaire: Metals Process Systems, F-92100 Boulogne-Billancourt (FR); Snecma Services, 75015 Paris (FR)
(72) Inventeur: DAVID, François, F-14123 Ifs (FR); LEROY, Yves, F-14400 Bayeux (FR); HUCHIN, Jean-Pierre, F-86100 Chatellerault (FR); MALIE, André, F-86100 Targe (FR)
(74) Mandataire: Plaçais, Jean-Yves
(86) Numéro de dépôt international: PCT/FR1999/002747
(87) Numéro de publication internationale: WO 2000/027570

(56) Documents cités:
- EP-A- 0 531 083
- WO-A-97/37800
- FR-A- 2 511 908
- US-A- 3 809 553
- US-A- 4 937 042
- US-A- 5 561 827
- US 5342573 A

## Description

La présente invention concerne un procédé de réalisation par métallurgie des poudres de pièces de forme destinées à être assemblées par autobrasage à des pièces métalliques susceptibles de les recevoir et dites réceptrices, lesdites pièces réceptrices étant formées en superalliage.

Elle concerne aussi un procédé d'assemblage de telles pièces de forme à des pièces métalliques réceptrices.

On entend par autobrasage dans la suite du présent document le brasage autogène de la pièce de forme sur la pièce métallique réceptrice, les éléments assurant le brasage étant contenus dans la pièce de forme.

L'opération d'autobrasage de la pièce de forme sur la pièce métallique peut comprendre ou être suivie d'un traitement thermique de diffusion à l'état solide en constituant ainsi ce qui est appelé communément une opération de brasage-diffusion, traitement destiné à homogénéiser la composition et la structure des pièces de forme et de la zone de liaison par autobrasage.

On connaît par le brevet EP 0 075 497 un procédé d'assemblage par brasage-diffusion de pièces métalliques telles que des composants en superalliage pour turbines à gaz qui consiste à interposer entre les surfaces à assembler une couche de liaison de composition globale correspondant à un superalliage et à réaliser sur cet ensemble un traitement de brasage-diffusion.

La couche de liaison est constituée par un mélange intime de deux poudres d'alliage, la première poudre dite " poudre de base " étant une poudre de superalliage et la seconde poudre étant une poudre de brasage en alliage Ni-Co-Si-B dont la température de liquidus est inférieure à la température de solidus des pièces mécaniques et de la poudre de base.

La température de fusion relativement basse de la poudre de brasage est assurée par sa teneur en Si et/ou en B.

On désigne dans la suite du présent document par " élément fondant " un élément, tel que, par exemple, de façon non limitative, le silicium ou le bore, qui abaisse sensiblement la température de solidus de l'alliage dans lequel il est introduit.

L'opération de brasage-diffusion est réalisée à une température telle que la poudre de brasage fond et, coulant entre les grains de poudre de base, permet de faire décroître très rapidement la porosité et d'obtenir une couche de liaison compacte indépendamment du volume de poudre mis en oeuvre.

L'application de la température est ensuite maintenue pour faire diffuser le ou les éléments fondants B et Si. L'homogénéisation de la composition résultant d'une telle diffusion fait remonter la température de liquidus des zones fondues qui se solidifient durant le maintien en température, la diffusion se poursuivant à l'état solide.

Il en résulte à la fin de l'opération de brasage-diffusion une structure homogène et dense avec absence de discontinuité entre les pièces à assembler.

Le même document EP 0 075 497 donne plusieurs exemples d'application à des superalliages. à base de nickel ou à base de cobalt.

Dans un des exemples, il s'agit de reconditionner une aube fixe de turbine en alliage à base de cobalt KC25NW selon désignation AFNOR fissurée par fatigue thermique.

Pour cela, une pâte contenant intimement mélangées la poudre de base en superalliage de Co, la poudre de brasage en alliage Ni-Co-Si-B et un liant volatil est appliqué dans la fissure préalablement nettoyée et/ou élargie.

Le liant du type solution de résine acrylique dans le monomère de celle-ci est éliminé par pyrolyse lors du traitement de brasage-diffusion à 1200°C.

Le document EP 0 075 497 prévoit aussi que l'on puisse appliquer au lieu d'une pâte une bande ou un ruban obtenus par laminage d'un mélange intime de poudres de base et de brasage et de résine acrylique.

Le brevet EP 0 075 497 prévoit également que l'on puisse rapporter une pièce élémentaire de forme simple sous forme d'une ébauche préfrittée obtenue à partir du mélange des poudres de base et de brasage, la surface de l'ébauche préfrittée assurant le rôle de la couche de liaison.

Le brevet cite notamment comme application le bouchage de trous support de noyau sur les aubes creuses de turbine en alliage NK15CADT selon désignation AFNOR issues de fonderie. Pour cela, on introduit dans le trou un bouchon constitué par une ébauche préfrittée contenant 75 % en poids de poudre de base en alliage NK17CDAT selon désignation AFNOR et 25 % en poids de poudre de brasage en alliage Ni-Co-Si-B et on réalise un autobrasage à 1200°C durant 15 min.

L'utilisation du procédé décrit dans ce brevet est néanmoins soumise à un certain nombre de limitations.

L'utilisation de pâtes ou de rubans contenant, outre les poudres de base et de brasage, un liant qu'il est nécessaire de décomposer et dont il faut éliminer les produits de décomposition lors du brasage-diffusion impose d'utiliser des fours capables d'éliminer de grandes quantités de gaz issus de la pyrolyse du liant. De tels fours sont mal adaptés à l'opération de brasage-diffusion qui s'effectue vers 1200°C et généralement sous vide.

Un autre problème à résoudre est la réalisation de pièces élémentaires sous forme d'ébauche préfrittées.

La mise en forme des ébauches peut être envisagée par compaction uniaxiale à froid mais ce procédé ne permet pas de réaliser des formes très élancées ou minces de densité homogène à cause des frottements entre grains de poudre ou entre grains et parois de la matrice de compaction. En outre, pour limiter ces frottements, on utilise des lubrifiants du type stéarate de zinc ou similaires comme additif aux poudres; ces lubrifiants sont susceptibles d'introduire du zinc dans l'ébauche, cet élément étant néfaste pour la tenue en service des superalliages.

D'autres procédés de mise en forme des ébauches sont en fait utilisés tels que la projection par plasma sur un substrat en rotation et la découpe par laser de rubans.

La projection par plasma permet de réaliser des ébauches de forme tubulaires de révolution par projection de poudre métallique sur un mandrin cylindrique tournant. Un tel procédé possède un très faible rendement, 90 % environ de la poudre projetée étant projetée ailleurs que sur le mandrin tournant, ce qui grève fortement le coût de réalisation des ébauches compte tenu du coût extrêmement élevé des poudres métalliques projetées. En outre, ce procédé n'assure pas de bords nets en extrémité d'ébauche, ce qui nécessite des recoupes et augmente encore le coût des pièces.

La découpe par laser de rubans obtenus par coulée de barbotine, élimination du solvant et frittage ne permet d'obtenir que des pièces planes de relativement faible épaisseur. Les chutes résultant de la découpe par laser sont toutefois importantes et représentent les 2/3 de la matière mise en oeuvre.

La consolidation d'ébauches préfrittées autobrasantes obtenues par métallurgie des poudres est décrite dans le brevet US 4,937,042 qui concerne la réalisation de pièces fixes de frottement en regard des ailettes de turbines à gaz. Les ébauches sont constituées d'un mélange d'une première poudre de superalliage de type M-Cr-Al ou M-Cr-Al-Y ne contenant pas de Si et d'une seconde poudre de type M-Cr-Al-Si contenant environ 10 % en poids de Si, l'élément Si étant l'élément fondant et M représentant l'élément Co ou l'élément Ni ou une combinaison de ces deux éléments. Les ébauches sont préfrittées à une température inférieure à la température de solidus de la seconde poudre.

La consolidation amenée par un tel préfrittage est très limitée compte tenu de la faible capacité de frittage des superalliages. Les ébauches ainsi obtenues sont donc peu manipulables.

On a cherché dans la présente invention à réaliser des pièces de forme destinées à être assemblées par autobrasage à des pièces métalliques réceptrices, ces pièces de forme pouvant être de formes très diverses voire complexes et de caractéristiques dimensionnelles relativement précises et étant obtenues par un procédé de métallurgie des poudres à haut rendement, c'est-à-dire que le rapport entre la masse de la pièce de forme obtenue et la masse de poudres métalliques mise en oeuvre pour ce faire est proche de 1.

On a aussi cherché à réaliser des pièces de forme à densité relative contrôlée voisine de 1 dont la densité est homogène dans le volume de la pièce et ne contenant pas d'éléments nocifs ou " poisons " pour les caractéristiques d'usage de ces pièces.

On a aussi cherché à réaliser des pièces de forme pleines relativement élancées dont le rapport longueur/largeur est, par exemple, au moins égal à 5 et des pièces de forme creuses relativement minces dont le rapport diamètre/épaisseur est, par exemple, au moins égal à 10.

Le problème à la base de l'invention est donc de concevoir un procédé de réalisation de pièces de forme qui permet un assemblage par autobrasage aux pièces réceptrices, qui soit plus efficace que dans l'art antérieur, notamment dans le procédé connu de EP 0 075 497.

Ce procédé met en oeuvre deux poudres métalliques, une première poudre dite " poudre de base " permettant d'obtenir les caractéristiques métallurgiques souhaitées et une seconde poudre dite " poudre de brasage en alliage comportant un élément fondant à une teneur telle que la température de liquidus de la poudre de brasage soit inférieure à la température de solidus de la poudre de base, la poudre de base ne comportant pas dans sa composition chimique d'addition volontaire d'élément fondant

La composition chimique de la poudre de base peut éventuellement être obtenue à partir d'un mélange de poudres.

La composition chimique de la poudre de base et celle de la poudre de brasage permettent de définir une température d'autobrasage qui est supérieure à la température du liquidus de la poudre de brasage et inférieure à celles du solidus de la poudre de base et de la pièce réceptrice.

Le procédé selon l'invention comprend la suite d'étapes suivante :
a) on prépare un mélange homogène de poudre de base, de poudre de brasage et d'un liant liquide ou à l'état fondu, dans lequel la composition chimique de la poudre de base correspond à un superalliage à base de Ni, de Co ou de Fe et celle de la poudre de brasage à un alliage à base de Ni, de Co ou de Fe dans lequel l'élément fondant est le Si et/ou le B.
   On entend ici par liant un constituant ou un ensemble de constituants permettant de lier les grains de poudres métalliques les uns aux autres pour former un mélange d'apparence homogène.
   Le liant dans la suite du présent document peut comprendre des additifs destinés, par exemple, à faciliter la dispersion, la mise en suspension des poudres métalliques ou à améliorer d'autres caractéristiques du mélange.
   Le qualificatif "liquide" pour le liant comprend l'état fondu et correspond à des consistances diverses pouvant être caractérisées par leur viscosité.
   Le liant est choisi pour pouvoir prendre consistance lorsqu'on le souhaite. On entend par là prendre un état capable de retenir une forme contrairement par exemple à l'état liquide.
b) On injecte le mélange ainsi préparé dans un moule de la pièce de forme à réaliser en appliquant audit mélange une pression appropriée.
   La géométrie du moule est adaptée à celle des pièces de forme à réaliser compte tenu des variations dimensionnelles résultant du procédé, variations dimensionnelles que l'homme du métier sait prévoir par son expérience ou prendre en compte à partir d'essais préliminaires.
   Le moulage est maintenu dans des conditions de température, de pression d'injection et de temps telles que s'y réalise la prise de consistance du liant.
c) une fois le liant devenu consistant, on extrait l'ébauche moulée du moule.
d) on élimine le liant de l'ébauche moulée par un moyen ou par une combinaison de moyens appropriés connus tels que, par exemple, des moyens physiques, thermiques ou chimiques. Cette étape est dite de déliantage et l'ébauche qui en est issue est dite déliantée.
e) On réalise sur l'ébauche déliantée un traitement de frittage destiné à la densifier jusqu'à une densité relative au moins égale à 95 % mais inférieure à 100%, le frittage étant mené à une température supérieure à la température de liquidus de la poudre de brasage mais inférieure à la température du traitement d'autobrasage ultérieur.

La condition sur la température minimale de frittage permet d'assurer un frittage en phase liquide nécessaire pour obtenir des pièces de forme de densité relative voisine de l'unité même dans le cas de poudres de base dont la capacité de frittage est faible, une densité élevée après frittage permettant de limiter l'évolution dimensionnelle lors de l'autobrasage.

La condition sur la température maximale de frittage permet d'assurer la formation d'une quantité suffisante de phase liquide lors de l'autobrasage pour assembler de manière sûre la pièce de forme à la pièce réceptrice.

Les conditions d'autobrasage sont quant à elles connues de l'homme du métier de ce type d'assemblage.

La suite d'étapes du procédé selon l'invention, à savoir préparation d'un mélange injectable, moulage, extraction, déliantage, frittage, correspond schématiquement à celles d'un procédé de moulage par injection de matières métalliques pulvérulentes, procédé désigné par MIM, abréviation de " metal injection moulding ".

Des variantes de tels procédés MIM sont par exemple décrites dans les brevets US 4,197,118, WO 88/07902 et WO 88/07903.

Les techniques MIM décrites dans ces brevets déposés il y a 10 à 20 ans sont utilisées pour réaliser des pièces finies de densité relative très proche de l'unité et l'homme du métier n'était jusqu'à présent aucunement incité à transposer ces techniques pour réaliser des composants présentant des caractéristiques opposées aux caractéristiques associées aux produits issus des techniques MIM, les produits obtenus par le procédé selon l'invention étant " semi-finis ", non complètement densifiés et destinés à subir une fusion partielle lors de leur mise en oeuvre.

Avantageusement le procédé selon l'invention s'applique à des poudres métalliques de base en superalliages à base de Ni, de Co ou de Fe. La poudre de brasage est alors un alliage de Ni, de Co ou de Fe dans lequel l'élément fondant est le Si, le B ou ces deux éléments à la fois.

Préférentiellement, la poudre de brasage contient, dans le cas où l'élément Si est utilisé seul ou en combinaison comme fondant, 2 à 12 % de Si en poids.

Préférentiellement, au cas où l'élément B est utilisé seul ou en combinaison comme fondant, la poudre de brasage contient de 1 à 5 % de B en poids.

Préférentiellement, l'alliage de la poudre de brasage est choisi parmi la liste suivante d'alliages: Ni-Si, Ni-B, Ni-Co-Si, Ni-Co-B, Ni-Co-Si-B, Ni-Cr-Al-Si, Ni-Co-Cr-Al-Si, Ni-Cr-B, Ni-Co-Cr-B.

Dans l'alliage de la poudre de brasage, les éléments non spécifiés se trouvent à des teneurs habituelles compte tenu des matières premières utilisées et des procédés d'élaboration de l'alliage.

Préférentiellement, le pourcentage pondéral de poudre de brasage par rapport à l'ensemble des deux poudres métalliques est compris entre 5 et 40 % et dépend de la nature de ces deux poudres.

Préférentiellement encore, la charge en poudres métalliques est d'au moins 50 % en volume dans le mélange réalisé avec le liant.

Comme indiqué ci-avant, diverses variantes de procédé MIM peuvent avantageusement être mises en oeuvre dans le procédé selon l'invention.

Le mécanisme de prise de consistance de l'ébauche dans le moule peut, selon une première variante du procédé selon l'invention, être un changement physique d'état liquide-solide du liant obtenu par maintien du moule à une température inférieure à la température dudit changement d'état.

Bien entendu, la température du moule est choisie de manière à réaliser la solidification du liant malgré d'éventuels phénomènes de surfusion et en tenant compte de l'influence de la présence d'additifs éventuels dans le liant.

Selon une sous-variante de cette première variante du procédé selon l'invention, le liant peut être ou comprendre une résine thermoplastique, le mélange liant-poudres métalliques étant alors préparé à une température supérieure à la température de fusion du liant et injecté dans le moule également à une température supérieure à cette température de fusion.

Selon une autre sous-variante de cette première variante du procédé selon l'invention, le liant peut être un système aqueux ou non aqueux liquide à température ambiante et le mélange préparé avec les poudres métalliques est injecté dans un moule refroidi à une température située en dessous de la température de solidification du liant.

L'étape de déliantage comprend dans cette sous variante une opération de lyophilisation ou de sublimation du liant.

Selon une autre variante du procédé selon l'invention, le liant est une résine thermodurcissable et le mécanisme de prise de consistance du liant est une polymérisation accélérée de la résine, par exemple dans un moule chauffé.

Selon encore une autre variante du procédé selon l'invention, le liant est susceptible d'une réaction sol-gel que l'on met en oeuvre durant l'étape de moulage. L'étape de déliantage comprend alors une opération de remise en solution du liant ou de ses constituants essentiels.

Avantageusement dans ces différentes variantes du procédé selon l'invention, l'étape de déliantage peut comprendre une opération de mise en solution d'au moins un composant du liant par action chimique d'un solvant de ce ou de ces composants.

Lorsque le liant comprend un polymère, l'étape de déliantage peut avantageusement comprendre une opération de dépolymérisation dudit polymère par action chimique et/ou catalytique d'un agent spécifique.

Avantageusement encore, l'étape de déliantage peut comprendre plus d'une opération, l'opération finale étant une opération de déliantage thermique.

Très avantageusement dans ce cas, l'opération de déliantage thermique se poursuit jusqu'à une température assurant un début de consolidation ou " préfrittage " des poudres métalliques. Ce préfrittage permet de manipuler sans risque de casse les ébauches déliantées avant de leur faire subir l'étape de frittage destinée à les densifier.

Dans la suite du présent document, le terme " frittage " est réservé à l'opération qui transforme les " ébauches " déliantées en pièces de forme autobrasantes à faible porosité sachant que, durant l'autobrasage, le processus physique de frittage et d'élimination de la porosité résiduelle se poursuit dans les pièces de forme.

Préférentiellement pour permettre le préfrittage des ébauches déliantées, le déliantage thermique est terminé à une température située dans l'intervalle de fusion de la poudre de brasage et très préférentiellement dans le demi-intervalle inférieur.

Très préférentiellement encore, l'étape de frittage est réalisée à une température comprise environ 50°C en dessous de celle de l'opération ultérieure d'autobrasage.

Optionnellement, l'opération de déliantage thermique et l'étape de frittage peuvent être réalisées à la suite dans le même four sans retour à l'ambiante entre ces deux opérations ou étapes.

Les pièces de forme obtenues après frittage ont des dimensions très régulières qui ne nécessitent pas ou qui ne nécessitent qu'une très faible retouche dimensionnelle par usinage pour pouvoir s'ajuster aux pièces réceptrices et réaliser un assemblage autobrasé solide.

Du fait de l'élimination poussée du liant lors du déliantage, les pièces de forme issues du procédé selon l'invention ne contiennent pas d'élément chimique autre que ceux qui constituent les poudres métalliques mises en oeuvre.

La présente invention couvre aussi un procédé d'assemblage des pièces de forme autobrasantes obtenues par le procédé de fabrication selon l'invention à des pièces réceptrices qui sont des composants en superalliage de turbines à gaz aéronautiques ou terrestres.

Selon ce procédé d'assemblage, l'alliage dont est constituée la poudre de base est choisi pour sa compatibilité avec le superalliage des pièces réceptrices et la pièce de forme est pré-assemblée à la pièce réceptrice en la disposant en contact ou à faible jeu avec la pièce réceptrice. Ceci impose éventuellement des conditions connues sur la forme et les dimensions de la pièce de forme et des parties en regard de la pièce réceptrice.

Le pré-assemblage entre ces deux pièces est alors porté à une température supérieure à la température de liquidus de la poudre de brasage et inférieure à la température de solidus de la poudre de base et de la pièce réceptrice pour réaliser l'autobrasage.

Préférentiellement et notamment lors de l'application du procédé à la réparation de pièces, le traitement d'autobrasage est suivi directement ou après retour à l'ambiante d'un traitement de diffusion destiné à faire diffuser les éléments chimiques et notamment le ou les éléments fondants et à homogénéiser la structure de la zone réparée.

Les figures ci-après illustrent de façon nullement limitative un exemple de pièce de forme et des exemples de mise en oeuvre des procédés de fabrication et d'assemblage selon l'invention.

La fig. 1 montre une pièce de forme autobrasante du type bague annulaire en superalliage.

La fig. 2 est un schéma des étapes d'une première variante du procédé de fabrication selon l'invention de la bague de la fig. 1, variante mettant en oeuvre une résine thermoplastique.

La fig. 3 est un schéma des étapes d'une deuxième variante du procédé de fabrication selon l'invention de la bague de la fig. 1, variante mettant également en oeuvre une résine thermoplastique.

La fig. 4 est un schéma des étapes d'une troisième variante du procédé de fabrication selon l'invention de la bague de la fig. 1, variante mettant en oeuvre un liant liquide à température ambiante.

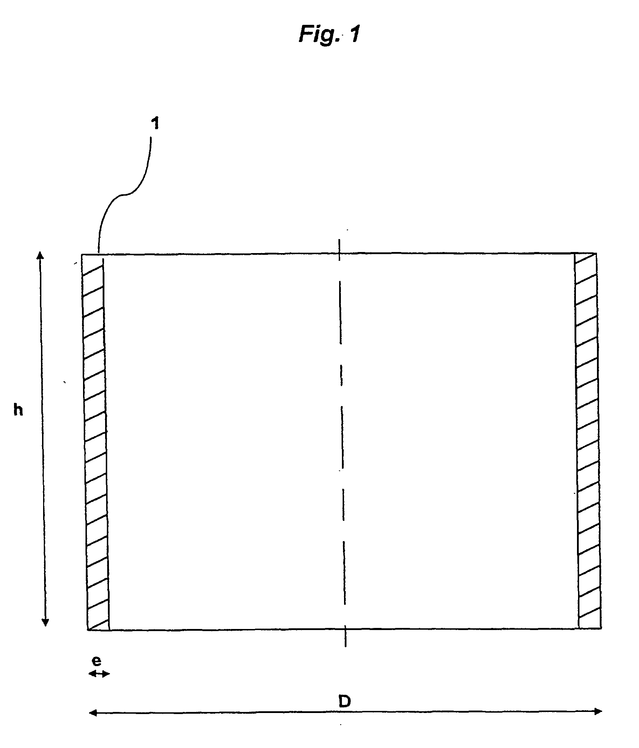

La fig. 1 montre une bague tubulaire 1 autobrasante en superalliage à base de nickel.

Son diamètre extérieur D est de l'ordre de 12 mm et son épaisseur e de l'ordre de 0,6 mm. Il s'agit donc d'une pièce mince de. rapport D/e élevé, de l'ordre de 20. Sa hauteur h est de l'ordre de 10 mm.

Cette bague étant destinée à être autobrasée dans un trou borgne d'une aube de turbine à gaz aéronautique en superalliage de désignation commerciale René 77 (alliage de Ni du type NK15CDAT), la tolérance sur son diamètre extérieur est très resserrée, de l'ordre de quelques centièmes de mm de manière à centrer parfaitement la bague, à limiter ses distorsions géométriques durant l'autobrasage et à faciliter sa liaison avec la pièce réceptrice, à savoir l'aube de turbine.

La bague 1 est fabriquée en superalliage à base de nickel par le procédé de métallurgie des poudres selon l'invention à l'aide de deux poudres métalliques, une poudre A de base et une poudre B de brasage.

La poudre A de base est une poudre en alliage connu de désignation commerciale Astroloy (NK17CDAT selon désignation AFNOR). Ce matériau est tout à fait compatible avec le superalliage René 77 de l'aube, notamment du point de vue température de solidus et caractéristiques mécaniques.

La température de solidus de la poudre A de base est de 1240 °C. Sa température de liquidus est de 1280 °C.

La poudre de brasage B utilisée pour réaliser le frittage de la poudre d'Astroloy et l'autobrasage avec l'aube est une poudre en alliage Ni-Co-Si-B contenant en poids 17% Co, 4% Si, 2,7% B.

La température de solidus de la poudre B de brasage est de 965 °C. Sa température de liquidus est de 1065 °C et est inférieure aux températures de solidus. de la poudre A de base et de celui de l'aube.

Ces données permettent de définir une température d'autobrasage de 1200°C qui est supérieure à la température de liquidus de la poudre de brasage mais qui est inférieure à la température du solidus de l'aube en René 77 et de celui de la poudre A d'Astroloy.

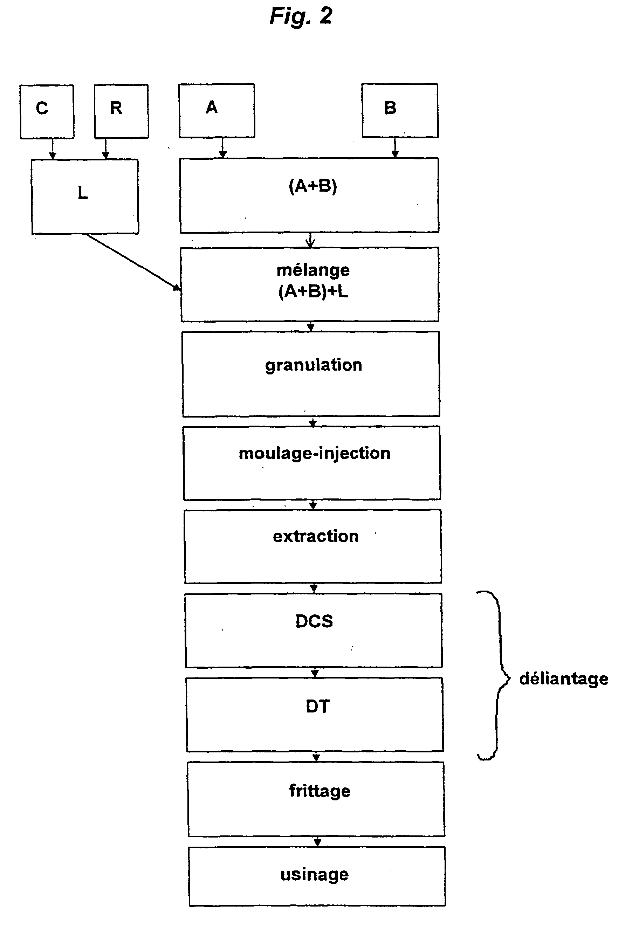

La fig. 2 décrit une première variante de mise en oeuvre du procédé selon l'invention.

Les deux poudres métalliques A et B sont des poudres à grains sphériques atomisées à l'argon et leur granulométrie est inférieure ou égale à 53 µm.

Ces deux poudres métalliques A et B sont prémélangées entre elles sous atmosphère inerte. Le prémélange des deux poudres métalliques A et B est désigné par (A+B).

La proportion pondérale de poudre A d'Astroloy à la poudre B de brasage est de 3/1, ce qui correspond à un pourcentage pondéral de 25 % de poudre B dans le prémélange (A+B) des deux poudres métalliques.

Selon cette première variante, on prépare un mélange pâteux des deux poudres métalliques prémélangées (A+B) avec un liant L fondu à 180 °C environ dans un mélangeur sous gaz inerte.

Le liant L est constitué d'un mélange de cire C et de résine thermoplastique R par exemple du type polyéthylène ou polypropylène.

La charge volumique de poudres métalliques (A+B) dans le mélange est de 70 %.

Le mélange homogène obtenu est refroidi et broyé pour constituer des granulés.

Les granulés obtenus peuvent être manipulés et stockés sans problème à température ambiante, les grains de poudres métalliques étant enrobés de liant solidifié.

Dans l'étape suivante de moulage-injection, les granulés sont introduits dans la vis d'Archimède d'une presse du genre de celles pour mouler par injection des objets en matière synthétique, la vis d'Archimède étant chauffée à environ 180-200 °C de manière à fondre le liant des granulés et à obtenir une pâte métallique dont la viscosité est comprise entre 10⁴ et 10⁷ cpoise et qui est de ce fait apte à être injectée par la vis d'Archimède dans un moule.

Le moule, réalisé en acier à outils, est composé de deux parties en appui l'une sur l'autre par un plan de joint, ces deux parties délimitant lorsqu'elles sont mises en appui une cavité annulaire ou empreinte dans laquelle est injectée la pâte métallique à l'aide de la vis d'Archimède.

Les dimensions de l'empreinte du moule sont celles de la bague à réaliser à un coefficient près, l'ébauche subissant des variations dimensionnelles lors des opérations ultérieures de fabrication, notamment un retrait lors du frittage.

Dans le cas des bagues de la fig. 1, l'empreinte a de ce fait des dimensions égales à 1,15 x celles de la bague.

Le retrait peut ne pas être isotrope ; on applique alors pour définir les dimensions du moule des coefficients de retrait différents selon les directions.

L'homme du métier sait prévoir ces variations dimensionnelles, éventuellement à l'aide de quelques essais préliminaires destinés à prendre en compte l'influence notamment des caractéristiques des poudres métalliques et du liant utilisés, de la charge en poudres métalliques dans le mélange et des conditions de frittage.

Le moule est maintenu à la température de l'ordre de 45 °C pour permettre à la fois un bon remplissage de l'empreinte et la solidification de la pâte métallique en 1 minute environ.

Une fois l'ébauche solidifiée, les deux parties du moule sont séparées et l'ébauche extraite de l'empreinte.

La construction du moule doit prendre en compte la contrainte de pouvoir extraire les ébauches moulées sans les endommager mais la prise en compte d'une telle contrainte est connue dans le domaine du moulage-injection.

L'étape suivante du procédé selon la fig. 2 est le déliantage qui est réalisé en deux opérations successives.

Une première opération est un déliantage chimique DCS par action d'un solvant qui est l'hexane et qui dissout la cire du liant. Ce déliantage est réalisé en phase vapeur et en phase liquide par immersion.

La seconde opération de déliantage réalisée est un déliantage thermique DT dans un four sous atmosphère d'hydrogène.

Cette seconde opération comprend d'abord une montée puis un maintien autour de 400-500°C où s'effectue la pyrolyse de la résine thermoplastique non dissoute par l'hexane.

La pyrolyse en milieu hydrogéné ne laisse quasiment aucun résidu du liant.

L'ébauche est à ce moment extrêmement poreuse, les pores occupant le volume laissé libre par le départ du liant. Les grains de poudres métalliques n'ont entre eux qu'une faible cohésion ce qui fait que l'ébauche est sensible aux chocs et est peu manipulable.

La température est alors montée dans le four de déliantage thermique jusqu'à 1000°C pour réaliser un préfrittage des ébauches déliantées. A cette température, supérieure à la température de solidus de la poudre B de brasage (965°C) et située au 1/3 de son intervalle de fusion, la poudre B fond partiellement et la phase liquide issue de B infiltre la surface des grains de poudre non fondus, notamment ceux de la poudre A de base, formant des ponts métalliques entre les grains et réalisant par là une consolidation de la structure.

Les ébauches sont maintenues à 1000°C durant 10 mn environ puis refroidies jusqu'à température ambiante.

Un préfrittage à une température plus basse, légèrement inférieure à la température du solidus de la poudre B de brasage, par exemple à 950°C, ne permettrait pas la formation de ponts métalliques et les ébauches seraient trop fragiles pour pouvoir être manipulées par la suite compte tenu de leur très faible épaisseur, inférieure au mm.

Un préfrittage à une température supérieure à 1000°C entraînerait la formation de trop de phase liquide au stade du préfrittage.

Une montée relativement lente à 1000°C contribue également à la qualité du préfrittage. Une vitesse de montée de l'ordre de 500°C/h donne satisfaction.

Après cette opération de déliantage thermique, les ébauches sont introduites dans le four de frittage qui est un four sous vide.

Le frittage est réalisé par une montée en étapes jusqu'à 800°C, puis par une montée à 1150°C soit une température située au dessus de celle du liquidus de la poudre B de brasage et 50°C en dessous de la température prévue pour l'autobrasage des bagues sur l'aube en René 77.

Les bagues sont maintenues 15 mn à 1150°C. Ces conditions sont suffisantes pour obtenir une densification poussée des pièces à plus de 96 % en conservant un potentiel suffisant de formation de phase liquide lors de l'autobrasage.

Après refroidissement à l'ambiante accéléré par introduction d'argon dans le four, les bagues annulaires sont contrôlées et éventuellement retouchées par rectification si notamment leur diamètre extérieur est trop grand pour leur utilisation.

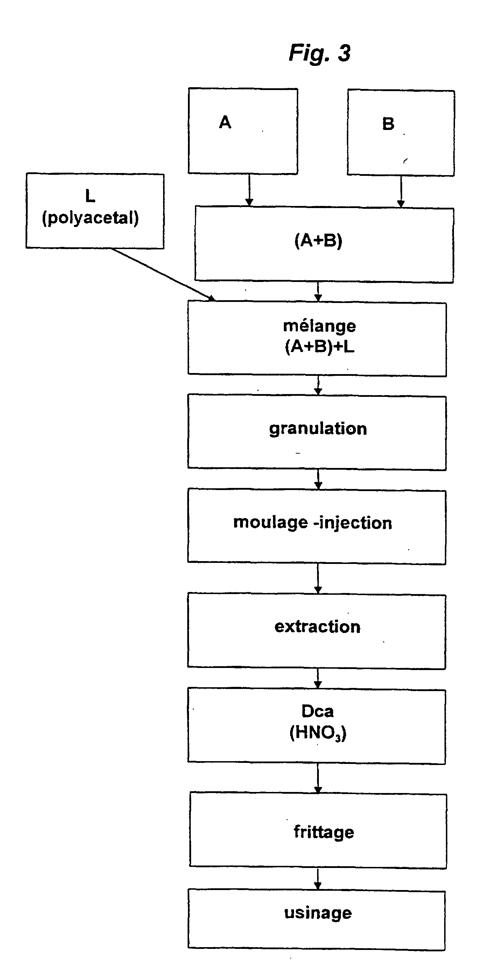

La fig. 3 décrit une deuxième variante pour fabriquer les bagues annulaires de la fig. 1.

On prépare un mélange homogène des deux mêmes poudres métalliques (A+B) prémélangées avec un liant L fondu qui est cette fois constitué d'une résine thermoplastique, le polyacétal, la charge en poudres métalliques étant de 65 % en volume dans le mélange. Ce mélange est granulé comme dans la première variante.

Comme dans la première variante, les granulés sont réchauffés jusqu'à fusion du liant et injectés dans le moule d'une presse de moulage-injection.

Après leur extraction du moule, les ébauches moulées solidifiées subissent un déliantage catalytique DCa à 110 °C à l'aide d'HNO₃ gazeux.

Cet agent dépolymérise le polyacétal qui se transforme en monomère gazeux, le formaldéhyde, lequel est évacué.

Cette étape de déliantage catalytique permet d'éliminer quasiment en totalité le liant, l'opération de déliantage thermique n'étant pas de ce fait rendue nécessaire.

L'ébauche déliantée est ensuite directement frittée dans un four sous vide à 1150°C comme pour la première variante.

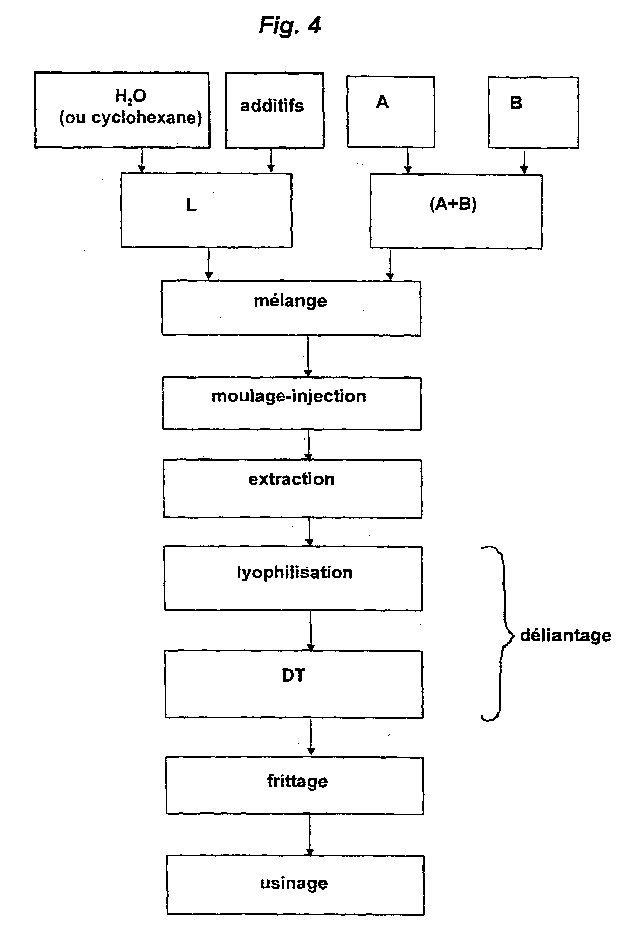

La fig. 4 décrit une troisième variante pour fabriquer les bagues annulaires de la fig. 1.

On prépare cette fois un mélange des mêmes poudres métalliques (A+B) prémélangées avec un liant L qui est liquide à température ambiante.

Ce liant L peut-être un système aqueux ou non aqueux.

Dans le cas d'utilisation d'un système aqueux, le constituant majeur du liant est l'eau, des additifs à l'eau améliorant la dispersion et la mise en suspension des grains de poudres métalliques, permettant de conditionner la viscosité du mélange à température ambiante ou ayant un rôle cryo-protecteur. La demande de brevet WO 88/07902 décrit de tels systèmes aqueux.

La barbotine métallique ainsi constituée avec le système aqueux L et une charge de l'ordre de 60 % de poudres métalliques (A+B) possède une viscosité allant de 10³ à 10⁴ cpoise et peut être conservée dans des récipients fermés avant le moulage-injection.

L'opération de moulage-injection est alors réalisée dans un moule en acier à outils refroidi à -40°C ou à une température inférieure.

Le brevet EP 587 483 décrit une presse à injecter de telles barbotines et notamment la tête d'injection de la presse.

Le brevet EP 626 224 décrit un dispositif pour réaliser le moulage de telles barbotines aux températures inférieures à l'ambiante sans faire givrer la surface de l'empreinte ou du plan de joint du moule.

L'utilisation d'un système non aqueux en alternative à un système aqueux est décrit dans la demande de brevet WO 88/07903.

On peut par exemple utiliser du cyclohexane avec des additifs tels qu'un dispersant des poudres métalliques et un colloïde pour conditionner la viscosité du mélange.

Le moule est dans ce cas maintenu à une température de l'ordre de -20°C.

Que le liant L soit un système aqueux ou non aqueux, les glaçons métalliques extraits du moule après solidification de la barbotine sont conservés à basse température puis déliantés en deux opérations.

La première opération de déliantage est une opération connue de lyophilisation, l'eau ou le cyclohexane étant éliminés par sublimation lors de cette opération.

La seconde opération de déliantage est un déliantage thermique qui permet de brûler les additifs à l'eau ou au cyclohexane qui n'ont pas été éliminés lors de la lyophilisation.

Ce déliantage thermique est conduit de la même manière que dans le cas de la variante de la fig. 2 et permet également de préfritter les ébauches obtenues en montant à 1000°C en final.

L'étape de frittage est également réalisée de la même manière que pour la variante de la fig. 2.

Le procédé de fabrication de pièces de forme autobrasantes selon l'invention n'est bien sûr pas limité aux variantes décrites ci-dessus.

Les résultats obtenus sur la bague annulaire de la fig. 1 fabriquée selon l'invention par la variante de la figure 2 sont les suivants :
- Densité absolue de la bague frittée : 7,83, soit une densité relative de 98 %.
- Teneur en carbone de la bague = 0,03 %,
- Taille de grains = n°6,5 selon spécification ASTM E112,
- Ecart-type sur le diamètre intérieur = 0,01 mm,
- Ecart moyen de circularité sur le diamètre intérieur.
L'écart de circularité est pris égal à la différence entre diamètre maximal et diamètre minimal sur une même section.
L'écart moyen est pris égal à la moyenne des écarts sur un même lot de pièces.
L'écart moyen de circularité sur le diamètre intérieur mesuré à 25 % de la hauteur de la bague est égal à 0,02 mm.
L'écart moyen de circularité sur le diamètre intérieur mesuré à 75 % de la hauteur de la bague est égal à 0,03 mm.

Nous allons maintenant rapidement décrire le procédé d'assemblage selon l'invention à l'aide du même exemple.

On réalise dans l'aube de turbine en superalliage René 77 un alésage de diamètre très précis, tolérancé à quelques centièmes de mm par exemple, et on retouche si nécessaire le diamètre extérieur de la bague de la figure 1 pour permettre son engagement à force dans l'alésage de l'aube.

Ce pré-assemblage à force est alors porté sous vide à 1200 °C, maintenu 15 mn à cette température puis refroidi à température ambiante.

On peut alors contrôler la qualité de l'assemblage obtenu.

On peut aussi réaliser un traitement de diffusion à l'état solide de 2 h à 1200 °C, soit dans le four d'autobrasage soit ultérieurement après retour à l'ambiante.

On peut enfin réaliser un traitement thermique de qualité sur l'assemblage réalisé.

## Revendications

1. Procédé de fabrication par métallurgie des poudres de pièces de forme du genre destinées à être assemblées par autobrasage à une température déterminée à des pièces métalliques réceptrices en superalliage, ledit procédé de fabrication mettant en oeuvre deux poudres métalliques,
- une première poudre dite "poudre de base" en alliage permettant d'obtenir les caractéristiques métallurgiques souhaitées et ne comportant pas substantiellement d'élément fondant,
- et une seconde poudre dite "poudre de brasage" en alliage comportant au moins un élément dit fondant à une teneur telle que la température de liquidus de l'alliage de la poudre de brasage est inférieure à la température de solidus de l'alliage de la poudre de base,
lesdites poudres de base et de brasage étant choisies pour que la température du liquidus de la poudre de brasage soit inférieure à la température d'autobrasage et que la température de solidus de la poudre de base soit supérieure à la température d'autobrasage,
ledit procédé de fabrication comprenant les étapes suivantes :
a) préparation d'un mélange homogène de poudre de base, de poudre de brasage et d'un liant liquide, ou à l'état fondu dans lequel la composition chimique de la poudre de base correspond à un superalliage à base de Ni, de Co ou de Fe et celle de la poudre de brasage à un alliage à base de Ni, de Co ou de Fe dans lequel l'élément fondant est le Si et/ou le B et dans lequel le liant est choisi pour pouvoir dans des conditions contrôlées prendre consistance,
b) moulage-injection dudit mélange dans un moule de la pièce de forme à réaliser, le moulage étant maintenu dans des conditions de température, de pression et de temps telles que s'y réalise la prise de consistance du liant,
c) extraction de l'ébauche moulée du moule,
d) déliantage,
e) frittage de l'ébauche déliantée à une température supérieure à la température de liquidus de la poudre de brasage mais inférieure à la température du traitement d'autobrasage ultérieur de manière à obtenir une pièce de forme apte à l'autobrasage dont la densité relative est au moins égale à 95 %, mais inférieure à 100%.

2. Procédé de fabrication de pièces de forme selon la revendication 1 **caractérisé en ce que** l'alliage de la poudre de brasage contient de 2 à 12 % de Si en poids.

3. Procédé de fabrication de pièces de forme selon la revendication 1 ou 2 **caractérisé en ce que** l'alliage de la poudre de brasage contient de 1 à 5% de B en poids.

4. Procédé de fabrication de pièces de forme selon l'une quelconque des revendications 1 à 3 **caractérisé en ce que** l'alliage de la poudre de brasage est choisi parmi la liste des alliages suivants : Ni-Si, Ni-B, Ni-Co-Si, Ni-Co-B, Ni-Co-Si-B, Ni-Cr-Al-Si, Ni-Co-Cr-Al-Si, Ni-Cr-B, Ni-Co-Cr-B.

5. Procédé de fabrication de pièces de forme selon l'une quelconque des revendications 1 à 4, **caractérisé en ce que** le pourcentage pondéral de poudre de brasage dans l'ensemble des deux poudres métalliques est compris entre 5 et 40%.

6. Procédé de fabrication de pièces de forme selon l'une quelconque des revendications 1 à 5 **caractérisé en ce que** la charge de poudres métalliques dans le mélange avec le liant est d'au moins 50 % en volume.

7. Procédé de fabrication de pièces de forme selon l'une quelconque des revendications 1 à 6 **caractérisé en ce que** la prise de consistance du liant dans le moule est un changement physique d'état liquide-solide du liant obtenu par maintien du moule à une température inférieure à la température dudit changement d'état.

8. Procédé de fabrication de pièces de forme selon la revendication 7 **caractérisé en ce que** le liant comprend une résine thermoplastique.

9. Procédé de fabrication selon la revendication 7 **caractérisé en ce que** le liant est un système aqueux ou non aqueux liquide à température ambiante et **en ce que** l'étape de déliantage comprend une opération de lyophilisation ou de sublimation du constituant principal du liant.

10. Procédé de fabrication selon l'une quelconque des revendications 1 à 6 **caractérisé en ce que** le liant comprend essentiellement une résine thermodurcissable et **en ce que** la prise de consistance du liant dans le moule est obtenue par polymérisation de ladite résine.

11. Procédé de fabrication selon l'une quelconque des revendications 1 à 6 **caractérisé en ce que** la prise de consistance du liant lors de l'étape de moulage est obtenue par une réaction sol-gel dont est susceptible ledit liant et **en ce que** l'étape de déliantage comprend une opération de remise en solution du gel obtenu.

12. Procédé de fabrication de pièces de forme selon la revendication 9 ou selon la revendication 10 **caractérisé en ce que** l'étape de déliantage comprend une opération chimique de mise en solution d'au moins un composant du liant par action d'un solvant de ce ou de ces composant(s).

13. Procédé de fabrication de pièces de forme selon la revendication 8 ou selon la revendication 10 **caractérisé en ce que**, le liant comprenant un polymère, l'étape de déliantage comprend une opération de dépolymérisation de celui-ci.

14. Procédé de fabrication selon l'une quelconque des revendications 1 à 13 **caractérisé en ce que** l'étape de déliantage consiste en ou comprend en final une opération de déliantage thermique.

15. Procédé de fabrication selon la revendication 14 **caractérisé en ce que** l'opération de déliantage thermique se poursuit jusqu'à une température assurant un préfrittage des ébauches déliantées.

16. Procédé de fabrication selon la revendication 15 **caractérisé en ce que** le préfrittage est terminé à une température située dans l'intervalle de fusion de la poudre de brasage.

17. Procédé de fabrication selon la revendication 15 ou 16 **caractérisé en ce que** le préfrittage est terminé à une température située dans le demi-intervalle inférieur de fusion de la poudre de brasage.

18. Procédé de fabrication selon l'une quelconque des revendications 15 à 17 **caractérisé en ce que** l'opération de déliantage thermique et l'étape de frittage sont réalisées à la suite dans le même four sans retour à la température ambiante entre ces deux opérations ou étapes.

19. Procédé de fabrication selon l'une quelconque des revendications 1 à 18 **caractérisé en ce que** l'étape de frittage est réalisée à une température environ 50°C en dessous de la température d'assemblage des pièces de forme par autobrasage.

20. Procédé d'assemblage de pièces de forme autobrasantes obtenues selon le procédé de fabrication objet de l'un quelconque des revendications 1 à 19 à des pièces réceptrices en superalliage, dans lequel les pièces réceptrices sont des composants de turbines à gaz aéronautiques ou terrestres, dans lequel la poudre de base dont sont constituées lesdites pièces de forme est en alliage compatible avec le superalliage desdites pièces réceptrices, dans lequel lesdites pièces de forme ont des formes et dimensions permettant leur pré-assemblage auxdites pièces réceptrices et dans lequel on réalise un autobrasage des pièces de forme sur les pièces réceptrices à une température supérieure à la température de liquidus de la poudre de brasage et inférieure à la température de solidus de la poudre de base et de la pièce réceptrice.

21. Procédé d'assemblage selon la revendication 20 **caractérisé en ce que** le traitement d'autobrasage est suivi directement ou après retour à l'ambiante d'un traitement de diffusion à l'état solide.

22. Procédé de réparation de turbines à gaz selon la revendication 20 ou 21 **caractérisé en ce que** les pièces réceptrices sont en alliage de désignation commerciale René 77, **en ce que** les pièces de forme sont en alliage de désignation commerciale Astroloy et **en ce que** le traitement d'autobrasage est réalisé à 1200°C.

## Patentansprüche

1. Verfahren zur pulvermetallurgischen Herstellung von Formteilen der Art, die durch Selbsthartlötung bei einer bestimmten Temperatur mit metallischen Aufnahmeteilen aus Superlegierung verbunden werden, wobei in diesem Verfahren zwei metallische Pulver verwendet werden,
- nämlich ein "Basispulver" genanntes erstes Pulver aus einer Legierung, die ermöglicht, die erwünschten metallurgischen Charakteristika zu erlangen und die substantiell kein Schmelzelement enthält,
- und ein "Hartlötpulver" genanntes zweites Pulver aus einer Legierung, die wenigstens ein sogenanntes Schmelzelement mit einem derartigen Gehalt enthält, dass die Hartlötpulver-Liquidustemperatur der Legierung niedriger ist als die Basispulver-Solidustemperatur der Legierung,
wobei das Basispulver und das Hartlötpulver so ausgewählt werden, dass die Liquidustemperatur des Hartlötpulvers niedriger ist als die Selbsthartlötungstemperatur, und dass die Solidustemperatur des Basispulvers höher ist als die Selbsthartlötungstemperatur,
wobei das genannte Herstellungsverfahren dabei die folgenden Schritte umfasst:
a) Herstellung einer homogenen Mischung aus Basispulver, Hartlötpulver und einem flüssigen oder im geschmolzenen Zustand befindlichen Bindemittel, bei der die chemische Zusammensetzung des Basispulvers einer Superlegierung auf der Basis von Ni, Co oder Fe entspricht und diejenige des Hartlötpulvers einer Legierung auf der Basis von Ni, Co oder Fe, bei der das Schmelzelement Si und/oder B ist und das Bindemittel so gewählt wird, dass unter kontrollierten Bedingungen seine Konsistenz zunehmen kann,
b) Spritzgießen der genannten Mischung in einer Form des herzustellenden Formteils, wobei das Gießen unter solchen Temperatur-, Druck- und Zeitbedingungen stattfindet, dass die Konsistenzzunahme des Bindemittel sich realisiert,
c) Entnahme des gegossenen Rohlings aus der Form,
d) Bindemittel-Eliminierung,
e) Sintern des bindemittelfreien Rohlings bei einer Temperatur, die höher ist als die Liquidustemperatur des Hartlötpulvers aber niedriger als die spätere Selbsthartlötungstemperatur, um ein selbsthartlötbares Formteil zu erhalten, dessen relative Dichte wenigstens gleich 95 % aber niedriger als 100 % ist.

2. Verfahren zur Herstellung von Formteilen nach Anspruch 1, **dadurch gekennzeichnet, dass** die Legierung des Hartlötpulvers 2 bis 12 Gew.% Si enthält.

3. Verfahren zur Herstellung von Formteilen nach Anspruch 1 oder 2, **dadurch gekennzeichnet, dass** die Legierung des Hartlötpulvers 1 bis 5 Gew.% B enthält.

4. Verfahren zur Herstellung von Formteilen nach einem der Ansprüche 1 bis 3, **dadurch gekennzeichnet, dass** die Hartlötpulverlegierung ausgewählt wird aus der Liste der folgenden Legierungen: Ni-Si, Ni-B, Ni-Co-Si, Ni-Co-B, Ni-Co-Si-B, Ni-Cr-Al-Si, Ni-Co-Cr-Al-Si, Ni-Cr-B, Ni-Co-Cr-B.

5. Verfahren zur Herstellung von Formteilen nach einem der Ansprüche 1 bis 4, **dadurch gekennzeichnet, dass** der Gewichtsprozentsatz des Hartlötpulvers in beiden Metallpulvem insgesamt zwischen 5 und 40 % enthalten ist.

6. Verfahren zur Herstellung von Formteilen nach einem der Ansprüche 1 bis 5, **dadurch gekennzeichnet, dass** der Metallpulvereinsatz bzw. -anteil in der Mischung mit dem Bindemittel mindestens 50 Volumenprozent beträgt.

7. Verfahren zur Herstellung von Formteilen nach einem der Ansprüche 1 bis 6, **dadurch gekennzeichnet, dass** die Konsistenzzunahme des Bindemittels in der Form auf einer physikalischen Zustandsveränderung des Bindemittels vom flüssigen in den festen Zustand beruht, realisiert indem man die Form auf einer Temperatur hält, die niedriger ist als die Temperatur der genannten Zustandsveränderung.

8. Verfahren zur Herstellung von Formteilen nach Anspruch 7, **dadurch gekennzeichnet, dass** das Bindemittel ein thermoplastisches Harz umfasst.

9. Verfahren zur Herstellung von Formteilen nach Anspruch 7, **dadurch gekennzeichnet, dass** das Bindemittel bei Umgebungstemperatur ein wässriges oder nichtwässriges System ist, und dadurch, dass der Schritt zur Eliminierung des Bindemittels eine Operation zur Lyophilisation oder Sublimation des Hauptbestandteils des Bindemittels umfasst.

10. Verfahren zur Herstellung von Formteilen nach einem der Ansprüche 1 bis 6, **dadurch gekennzeichnet, dass** das Bindemittel im Wesentlichen ein wärmeaushärtendes Harz umfasst, und dadurch, dass die Konsistenzzunahme des Bindemittels in der Form durch Polymerisation dieses Harzes realisiert wird.

11. Verfahren zur Herstellung von Formteilen nach einem der Ansprüche 1 bis 6, **dadurch gekennzeichnet, dass** die Konsistenzzunahme des Bindemittels in dem Gießschritt durch eine Sol-Gel-Reaktion realisiert wird, zu der das Bindemittel fähig ist, und dadurch, dass der Schritt zur Eliminierung des Bindemittels eine Operation zur Wiederherstellung von Lösung aus dem erhaltenen Gel ist.

12. Verfahren zur Herstellung von Formteilen nach Anspruch 9 oder nach Anspruch 10, **dadurch gekennzeichnet, dass** der Schritt zur Eliminierung des Bindemittels eine chemische Operation umfasst, bei der wenigstens ein Bestandteil des Bindemittels in einem Lösungsmittel dieses Bestandteils oder dieser Bestandteile aufgelöst wird.

13. Verfahren zur Herstellung von Formteilen nach Anspruch 8 oder nach Anspruch 10, **dadurch gekennzeichnet, dass** das Bindemittel ein Polymer umfasst und der Schritt zur Eliminierung des Bindemittels eine Operation zu seiner Entpolymerisierung umfasst.

14. Herstellungsverfahren nach einem der Ansprüche 1 bis 13, **dadurch gekennzeichnet, dass** der Schritt zu Eliminierung des Bindemittels in einer Operation zur thermischen Bindemittel-Eliminierung besteht oder eine solche umfasst.

15. Herstellungsverfahren nach Anspruch 14, **dadurch gekennzeichnet, dass** die Operation zur thermischen Bindemittel-Eliminierung bis zu einer Temperatur durchgeführt wird, die eine Vorsinterung der bindemittelfreien Rohlinge bewirkt.

16. Herstellungsverfahren nach Anspruch 15, **dadurch gekennzeichnet, dass** die Vorsinterung bei einer Temperatur beendet wird, die in dem Schmelzintervall bzw. -bereich des Hartlötpulvers liegt.

17. Herstellungsverfahren nach Anspruch 15 oder 16, **dadurch gekennzeichnet, dass** die Vorsinterung bei einer Temperatur beendet wird, die im unteren Schmelz-Halbintervall des Hartlötpulvers liegt.

18. Herstellungsverfahren nach einem der Ansprüche 15 bis 17, **dadurch gekennzeichnet, dass** die Operation zur thermischen Bindemittel-Eliminierung und der Sinterungsschritt nacheinander in demselben Ofen durchgeführt werden, ohne Rückkehr zu der Umgebungstemperatur zwischen diesen beiden Operationen oder Schritten.

19. Herstellungsverfahren nach einem der Ansprüche 1 bis 18, **dadurch gekennzeichnet, dass** der Sinterungsschritt bei einer Temperatur durchgeführt wird, die ungefähr 50°C unter der Temperatur zur Verbindung der Formteile durch Selbsthartlötung liegt.

20. Verfahren zur Verbindung von selbsthartlötenden Formteilen, gefertigt gemäß dem Herstellungsverfahren nach einem der Ansprüche 1 bis 19, mit Aufnahmeteilen aus Superlegierung, bei dem die Aufnahmeteile Bauteile von aeronautischen oder terrestrischen Gasturbinen sind, bei dem das Basispulver, aus dem die genannten Formteile sind, durch eine Legierung gebildet wird, die mit der Superlegierung der genannten Aufnahmeteile kompatibel ist, bei dem die genannten Formteile Formen und Dimensionen haben, die ihre Vorverbindung mit den genannten Aufnahmeteilen ermöglichen, und bei dem man eine Selbsthartlötung der Formteile in den Aufnahmeteilen bei einer Temperatur realisiert, die höher als die Liquidustemperatur des Hartlötpulvers ist und niedriger als die Solidustemperatur des Basispulvers und des Aufnahmeteils.

21. Verbindungsverfahren nach Anspruch 20, **dadurch gekennzeichnet, dass** auf die Selbsthartlötungsbehandlung direkt oder nach Rückkehr zur Umgebungstemperatur eine Diffusionsbehandlung im festen Aggregatzustand folgt.

22. Verfahren zur Reparatur von Gasturbinen nach Anspruch 20 oder 21, **dadurch gekennzeichnet, dass** die Aufnahmeteile aus einer Legierung mit dem Handelsnamen *René 77* sind, und dass die Formteile aus einer Legierung mit dem Handelsnamen *Astroloy* sind, und dass die Selbstlötungsbehandlung mit 1200°C durchgeführt wird.

## Claims

1. Method for the manufacture by powder metallurgy of shaped parts to be assembled by self-brazing at a specific temperature with receiving metal parts made from superalloy, said manufacturing method using two metal powders,
- a first alloy powder, called the "basic powder" making it possible to obtain the desired metallurgical characteristics and essentially not containing melting element,
- and a second alloy powder, called the "brazing powder" containing at least one so-called melting element with a content such that the liquidus temperature of the brazing powder alloy is lower than the solidus temperature of the basic powder alloy,
said basic and brazing powders being chosen so that the liquidus temperature of the brazing powder is lower than the self-brazing temperature and the solidus temperature of the basic powder is above the self-brazing temperature,
- said manufacturing method comprising the following stages:
a) preparation of a homogeneous mixture of basic powder, brazing powder and a liquid binder or a binder in the melted state, wherein the chemical composition of the basic powder corresponds to a superalloy based on Ni, Co or Fe and that of the brazing powder to a basic alloy of Ni, Co or Fe in which the melting element is Si and/or B and wherein the binder is chosen so that it can assume a consistency under controlled conditions,
b) moulding-injection of said mixture into a mould of the shaped part to be made, moulding being maintained under temperature, pressure and time conditions such that the binder assumes the consistency,
c) extraction of the moulded blank from the mould,
d) binder removal,
e) sintering of the binder-removed blank at a temperature above the liquidus temperature of the brazing powder, but below the subsequent self-brazing treatment temperature so as to obtain a shaped part suitable for self-brazing and whose relative density is at least 95%, but lower than 100%.

2. Method for the manufacture of shaped parts according to claim 1, **characterized in that** the brazing powder alloy contains 2 to 12 wt.% Si.

3. Method for the manufacture of shaped parts according to claims 1 or 2, **characterized in that** the brazing powder alloy contains 1 to 5 wt.% B.

4. Method for the manufacture of shaped parts according to any one of the claims 1 to 3, **characterized in that** the brazing powder alloy is chosen from within the following list of alloys: Ni-Si, Ni-B, Ni-Co-Si, Ni-Co-B, Ni-Co-Si-B, Ni-Cr-Al-Si, Ni-Co-Cr-Al-Si, Ni-Cr-B, Ni-Co-Cr-B.

5. Method for the manufacture of shaped parts according to any one of the claims 1 to 4, **characterized in that** the brazing powder weight percentage in the combined two metal powders is between 5 and 40%.

6. Method for the manufacture of shaped parts according to any one of the claims 1 to 5, **characterized in that** the metal powder charge in the mixture with the binder is at least 50 vol.%.

7. Method for the manufacture of shaped parts according to any one of the claims 1 to 6, **characterized in that** the assuming of consistency of the binder in the mould is a physical liquid-solid state change of the binder obtained by maintaining the mould at a temperature below said state change temperature.

8. Method for the manufacture of shaped parts according to claim 7, **characterized in that** the binder incorporates a thermoplastic resin.

9. Method of manufacture according to claim 7, **characterized in that** the binder is an aqueous or non-aqueous system liquid at ambient temperature and **in that** the binder removal stage comprises an operation of lyophilizing or sublimating the main constituent of the binder.

10. Method of manufacture according to any one of the claims 1 to 6, **characterized in that** the binder essentially incorporates a thermosetting resin and that the taking on of consistency of the binder in the mould is obtained by polymerizing said resin.

11. Method of manufacture according to any one of the claims 1 to 6, **characterized in that** the taking on of consistency of the binder during the moulding stage is obtained by a sol-gel reaction of said binder and **in that** the binder removal stage comprises an operation of redissolving the gel obtained.

12. Method for manufacturing shaped parts according to claim 9 or 10, **characterized in that** the binder removal stage comprises a chemical operation of dissolving at least one component of the binder by the action of a solvent with respect to said component or components.

13. Method for manufacturing shaped parts according to claim 8 or 10, **characterized in that**, the binder incorporating a polymer, the binder removal stage comprises an operation for depolymerizing the same.

14. Method of manufacture according to any one of the claims 1 to 13, **characterized in that** the binder removal stage consists of or finally comprises a thermal binder removal operation.

15. Method of manufacture according to claim 14, **characterized in that** the thermal binder removal operation continues up to a temperature ensuring a presintering of the binder-removed blanks.

16. Method of manufacture according to claim 15, **characterized in that** presintering is terminated at a temperature in the brazing powder melting range.

17. Method of manufacture according to claim 15 or 16, **characterized in that** presintering is terminated at a temperature in the lower brazing powder melting half-range.

18. Method of manufacture according to any one of the claims 15 to 17, **characterized in that** the thermal binder removal operation and the sintering stage are performed successively in the same furnace without any return to ambient temperature between two said operations or stages.

19. Method of manufacture according to any one of the claims 1 to 18, **characterized in that** the sintering stage is performed at a temperature approximately 50°C below the temperature of assembling the shaped parts by self-brazing.

20. Method for the assembly of self-brazing shaped parts obtained according to the manufacturing method according to any one of the claims 1 to 19 with superalloy receiving parts, wherein the receiving parts are aeronautical or terrestrial gas turbine components, wherein the basic powder from which said shaped parts are made is an alloy compatible with the superalloy of said receiving parts, wherein said shaped parts have shapes and dimensions permitting their preassembly with said receiving parts and wherein the shaped pars are self-brazed to the receiving parts at a temperature above the liquidus temperature of the brazing powder and below the solidus temperature of the basic powder and the receiving part.

21. Method of assembly according to claim 20, **characterized in that** the self-brazing treatment is followed directly or following a return to ambient conditions by a solid state diffusion treatment.

22. Method for repairing gas turbines according to claims 20 or 21, **characterized in that** the receiving parts are made from an alloy carrying the trade name René 77, **in that** the shaped parts are made from an alloy carrying the trade name Astroloy and **in that** the self-brazing treatment is performed at 1200°C.
